# EUROPÄISCHE PATENTSCHRIFT

(11) **EP 2 232 369 B1**
(45) Veröffentlichungstag und Bekanntmachung des Hinweises auf die Patenterteilung: **02.08.2017**
(21) Anmeldenummer: 09701674.5
(22) Anmeldetag: 13.01.2009
(51) Int. Cl.: G06F 9/50, G06F 9/48

(54) **COMPUTERSYSTEM, STEUERUNGSVORRICHTUNG FÜR EINE MASCHINE, INSBESONDERE FÜR EINEN INDUSTRIEROBOTER, UND INDUSTRIEROBOTER**
COMPUTER SYSTEM, CONTROL APPARATUS FOR A MACHINE, IN PARTICULAR FOR AN INDUSTRIAL ROBOT, AND INDUSTRIAL ROBOT
SYSTÈME INFORMATIQUE, DISPOSITIF DE COMMANDE POUR UNE MACHINE, NOTAMMENT POUR UN ROBOT INDUSTRIEL, ET ROBOT INDUSTRIEL

(30) Priorität: 18.01.2008 DE 102008005124
(43) Veröffentlichungstag der Anmeldung: 29.09.2010
(73) Patentinhaber: KUKA Roboter GmbH, 86165 Augsburg (DE)
(72) Erfinder: MUNZ, Heinrich, 88368 Bergatreute (DE)
(74) Vertreter: Schlotter, Alexander Carolus Paul
(86) Internationale Anmeldenummer: PCT/EP2009/050307
(87) Internationale Veröffentlichungsnummer: WO 2009/090164

(56) Entgegenhaltungen:
- WO-A-2007/109894
- US-A1- 2006 150 185
- US-A1- 2006 294 522
- US-A1- 2007 083 871

## Beschreibung

Die Erfindung betrifft eine Steuerungsvorrichtung für einen Industrieroboter und einen Industrieroboter.

Aus Kostengründen ist es erstrebenswert, möglichst keine Speziallösungen, sondern allgemein verfügbare Produkte oder Lösungen zu verwenden. Aus diesem Grund existiert bereits seit Mitte der 1990er Jahre die Tendenz, in der industriellen Maschinensteuerung Produkte aus der Büroumgebung, wie z.B. PCs für die Steuerung und Ethernet als Kommunikationstechnologie, zu verwenden.

Bei einem Einsatz von Software in Büroumgebungen kommt es jedoch hauptsächlich auf die korrekte Funktion der Software und nicht so sehr auf einen genauen zeitlichen Aspekt an. Die Software sollte ihre Aufgabe lediglich in einem für menschliche Verhältnisse angemessenen Rahmen, also im einstelligen Sekundenbereich oder knapp darunter, erledigen. Da bei einer Maschinensteuerung die Software die Bewegung der Maschine vorgibt, muss sie zeitlich relativ genau und synchron zur Maschinenbewegung arbeiten. Je schneller und genauer sich die Maschine bewegen soll, um so zeitlich genauer muss die Software sein. Bei modernen, relativ hochgenauen Maschinen ist es nicht unüblich, dass Motoren der Maschinen in einer Sekunde 8.000 Mal (entspricht 125 Mikrosekunden Zykluszeit) oder auch öfters von der Software nachgeregelt werden müssen. Hier ist es also nicht nur wichtig, dass eine Software ihre Aufgabe relativ korrekt erfüllt, sondern muss dies auch möglichst schnell tun. Man spricht in diesem Zusammenhang von der Echtzeitfähigkeit der Software. Je strikter diese Echtzeitfähigkeit ist, umso schneller und genauer kann sich die Maschine bewegen.

Standard-Betriebssysteme, die auch als "General-Purpose" Betriebssysteme bezeichnet werden und auf gängigen PCs in der Bürowelt installiert sind, sind jedoch in der Regel nicht echtzeitfähig, da dies für die vorgesehene Anwendung auch nicht notwendig ist. Standard-Betriebssysteme achten bei einer großen Auslastung des Systems eher auf eine gleichmäßige Ausgewogenheit des Gesamtsystems, ohne bestimmte Anwendungen zu priorisieren.

Die US 2006/0150185 A1 offenbart ein Computersystem mit zwei Prozessoren, die von einem Betriebssystem verwaltet werden.

Die Aufgabe der vorliegenden Erfindung ist es daher, ein Computersystem mit einem Standard-Betriebssystem derart auszuführen, dass dieses auch für die Steuerung von Industrierobotern in Echtzeit geeignet ist.

Die Aufgabe der Erfindung wird gelöst durch eine Steuerungsvorrichtung gemäß dem Anspruch 1.

Das Computersystem der erfindungsgemäßen Steuerungsvorrichtung ist mit einem Betriebssystem ausgestattet. Ein Betriebssystem im Allgemeinen ist eine Software, die den Betrieb des Computersystems ermöglicht. Es verwaltet seine Ressourcen, wie z.B. den Mehrkernprozessor und eventuell an das Computersystem angeschlossene Ein- und Ausgabegeräte, sowie die Ausführung von auf dem Computersystem laufenden Rechenprogrammen.

Das Betriebssystem ist insbesondere ein Standard-Betriebssystem, das auch als "General-Purpose" Betriebssystem bezeichnet wird. Ein "General-Purpose" Betriebssystem ist ein Betriebssystem, das nicht für eine spezielle Anwendung und insbesondere nicht speziell zum Steuern einer Maschine, z.B. eines Industrieroboters, vorgesehen ist. Obwohl einige Hersteller von "Genaral-Purpose" Betriebssystemen behaupten, ihre Betriebssysteme seien Echtzeit fähig, trifft dies für "General-Purpose" Betriebssystemen im Allgemeinen nicht zu. Beispiele von "General-Purpose" Betriebssystemen sind die Windows ® Betriebssysteme der Microsoft ® Corporation. Die Begriffe "Windows" und "Microsoft" sind markenrechtlich geschützte Begriffe der Microsoft Corporation.

Damit mit dem Standard-Betriebssystem, das in der Regel nicht für Echtzeitaufgaben vorgesehen ist, auch Echtzeitanwendungen ausgeführt werden können, ist erfindungsgemäß das Betriebssystem derart konfiguriert, dass Echtzeitaufgaben ausschließlich dem ersten Prozessorkern und weitere Aufgaben, also anfallende Aufgaben, die in Nicht-Echtzeit abgearbeitet werden können, ausschließlich dem zweiten Prozessorkern zugewiesen werden. Somit wird sicher gestellt, dass der wenigstens eine erste Prozessorkern ausschließlich hochpriore Aufgaben abarbeitet und keine Rechenleistung für niederpriore Aufgaben (die weiteren Aufgaben) verwenden muss. Niederpriore Aufgaben sind z.B. betriebssysteminterne Aufgaben.

In der Informatik wird zwischen den Begriffen "Echtzeit" und "Modellzeit" unterschieden. Echtzeit bezieht sich auf die Zeit, die Abläufe in der "realen Welt" verbrauchen. Modellzeit hingegen bezieht sich dagegen auf die von einem Rechenprogramm selbstverwaltete Laufzeit.

Unter einem echtzeitfähigen System kann man ein System verstehen, das auf ein Ereignis innerhalb eines vorgegebenen Zeitrahmens reagieren muss. Der vorgegebene Zeitrahmen hängt von der jeweiligen Aufgabe ab, die mit Echtzeit verarbeitet werden soll, und kann beispielsweise im Mikrosekundenbereich z.B. für schnelle digitale Steuerungs- und/oder Regelungsaufgaben oder auch im Sekundenbereich z.B. für Temperaturregelungen oder Füllstandsüberwachungen liegen.

Bisweilen unterscheidet man zwischen weicher und harter Echtzeit. Bei der sogenannten harten Echtzeit bedeutet ein Überschreiten des vorgegebenen Zeitrahmens einen Fehler. Bei der sogenannten weichen Echtzeit arbeitet dagegen das System die relevanten Eingaben in der Regel innerhalb des vorgegebenen Zeitrahmens ab, wobei grundsätzlich ein vereinzeltes Überschreiten des vorgegebenen Zeitrahmens möglich ist und zu keinem Fehler führt. Nach einer Ausführungsform des erfindungsgemäßen Computersystems ist dessen Betriebssystem konfiguriert, ausschließlich die harten Echtzeitaufgaben dem ersten Prozessorkern zuzuweisen. Die weichen Echtzeitaufgaben sind dann Teil der weiteren Aufgaben, die zur Abarbeitung ausschließlich dem zweiten Prozessorkern zugewiesen werden.

Das Betriebssystem ist konfiguriert, aufgrund von ersten externen Interrupts ausgelöster und den Echtzeitaufgaben bzw. den harten Echtzeitaufgaben zugeordneter erster Unterbrechungsroutinen dem ersten Prozessorkern und aufgrund von zweiten externen Interrupts ausgelöster und den weiteren Aufgaben zugeordneter zweiter Unterbrechungsroutinen dem zweiten Prozessorkern zuzuweisen.

Unter einem Interrupt versteht man in der Informatik ein externes Ereignis, z.B. eine abgelaufene Zeit eines Timers oder eines sonstigen Hardwaresignals, das eine Unterbrechung eines der Prozessorkerne und die Verzweigung in eine entsprechende Unterbrechungsroutine erzwingt. Aufgrund eines Interrupts bzw. einer dem Interrupt zugeordneten Unterbrechungsanforderung (Interrupt Request) wird die Unterbrechungsroutine, die auch als "Interrupt Service Routine (ISR)" bezeichnet wird, initiiert, die der Prozessorkern abarbeitet, den das Betriebssystem auswählt. Aufgrund der Unterbrechungsanforderung wird der normale Programmablauf unterbrochen, um die Unterbrechungsroutine auszuführen. Ist die Unterbrechungsroutine abgearbeitet, dann kehrt der Programmablauf wieder an die Stelle vor der Unterbrechung zurück.

Somit werden von externen Interrupts ausgelöste und den Echtzeitaufgaben bzw. den harten Echtzeitaufgaben zugeordnete Unterbrechungsroutinen lediglich dem ersten Prozessorkern zum Abarbeiten zugewiesen. Die restlichen Unterbrechungsroutinen arbeitet der zweite Prozessorkern ab. Somit wird sicher gestellt, dass der wenigstens eine erste Prozessorkern ausschließlich für das Abarbeiten der den Echtzeitaufgaben bzw. der den harten Echtzeitaufgaben zugeordneten Unterbrechungsroutinen vorbehalten ist.

Systembedingt kann es sein, dass aus einer Unterbrechungsanforderung bestimmte, wenn nicht gar die meisten Betriebssystemaufrufe nicht durchgeführt werden können. Aus so genannten Deferred Procedure Calls (DPCs) ist dies jedoch möglich. Das Betriebssystem ist derart konfiguriert, aus den ersten Unterbrechungsroutinen erste Deferred Procedure Calls zu initiieren, um daraus die den Echtzeitaufgaben zugeordneten ersten Unterbrechungsroutinen durchzuführen, und aus den zweiten Unterbrechungsroutinen zweite Deferred Procedure Calls zu initiieren, um daraus die den weiteren Aufgaben zugeordneten zweiten Unterbrechungsroutinen durchzuführen. Dadurch ist es möglich, dass die relevante Unterbrechungsroutine als solche uneingeschränkt vom relevanten Prozessorkern durchgeführt werden kann, indem z.B. eine Kommunikation mit auf dem Computersystem laufenden Programmfäden (Threads) ermöglicht wird. Ein Programmfaden, der im Englischen als "Thread" bezeichnet wird, ist ein einzelner Programmablauf.

Standard-Betriebssysteme können derart ausgeführt sein, dass sie Deferred Procedure Calls in einen FIFO-Puffer ("First-In-First-Out") ablegen und in der Reihenfolge des Ablegens durch die Unterbrechungsanforderung vom System auch wieder nacheinander herausholen. Das Betriebssystem des Computersystems ist konfiguriert, dem ersten Prozessorkern einen ersten FIFO-Puffer und dem zweiten Prozessorkern einen zweiten FIFO-Puffer zuzuordnen, um die ersten Deferred Procedure Calls in den ersten FIFO-Puffer und die zweiten Deferred Procedure Calls in den zweiten FIFO-Puffer zwischen zu speichern, um sicher zu stellen, dass keine niederprioren und für den zweiten Prozessorkern vorgesehene Unterbrechungsroutinen das Zuführen von für den ersten Prozessorkern bestimmten höherprioren Unterbrechungsroutinen blockieren.

Das Betriebssystem kann auch konfiguriert sein, den Echtzeitaufgaben bzw. den harten Echtzeitaufgaben zugeordneten erste Programmfäden dem ersten Prozessorkern und den weiteren Aufgaben zugeordneten zweite Programmfäden dem zweiten Prozessorkern zuzuweisen. Mit dieser Variante des erfindungsgemäßen Computersystems wird sicher gestellt, dass Programmfäden (Threads), die den Echtzeitaufgaben bzw. den harten Echtzeitaufgaben zugeordnet sind, ausschließlich vom ersten Prozessorkern abgearbeitet werden, und der erste Prozessorkern keine Programmfäden (Threads) abarbeitet, die den weiteren, niederprioren Aufgaben zugeordnet sind.

Demzufolge ist es möglich, ein Standard-Betriebssystem, das insbesondere nicht für die Steuerung eines Industrieroboters entwickelt wurde, auch als Steuerungsvorrichtung zum Steuern eines Industrieroboters, insbesondere in Echtzeit, zu verwenden. Unter dem Begriff "Steuern" wird hier auch "Regeln" verstanden.

Industrieroboter sind Handhabungsmaschinen, die zur selbsttätigen Handhabung von Objekten mit zweckdienlichen Werkzeugen ausgerüstet und in mehreren Bewegungsachsen insbesondere hinsichtlich Orientierung, Position und Arbeitsablauf programmierbar sind. Industrieroboter weisen ein Computersystem auf, das beim erfindungsgemäßen Industrieroboter im Wesentlichen durch das erfindungsgemäße Computersystem gebildet ist.

Weist das Betriebssystem einen Multimediadienst auf, dann kann gemäß einer Ausführungsform der erfindungsgemäßen Steuerungsvorrichtung das Betriebssystem derart konfiguriert sein, den Echtzeitaufgaben zugeordnete Programmfäden über den Multimediadienst zu priorisieren. Der Multimediadienst ist vorgesehen, damit der Mehrkernprozessor Multimedia-Programme, wie insbesondere Audio- oder Video-Wiedergabeprogramme, möglichst unterbrechungsfrei abarbeitet. Multimediadienste können ausgeführt sein, automatisch bestimmten Programmfäden (Threads) mittels entsprechender Programmiermethoden mehr Rechenzeit des Prozessors zur Verfügung zu stellen. Mittels entsprechender Programmiermethoden ist es möglich, bestimmte Programmfäden anzugeben, die das Computersystem, insbesondere der Mehrkernprozessor, bevorzugt behandeln soll, indem ihnen mehr Rechenzeit zur Verfügung gestellt wird.

Handelt es sich beim Betriebssystem um ein Windows ® Betriebssystem der Firma Microsoft ® Corporation und bei dem Multimediadienst um den so genannten Multimedia Class Scheduler Service dieses Betriebssystems, dann ist die Priorisierung der Echtzeitaufgaben über Informationen, die in der Registry des Betriebssystems gespeichert sind, möglich.

Ausführungsbeispiele der Erfindung sind exemplarisch in den beigefügten schematischen Zeichnungen dargestellt. Es zeigen:
- Fig. 1: einen Industrieroboter mit einem Steuerrechner und
- Fig. 2: ein alternativer Steuerrechner für den Industrieroboter.

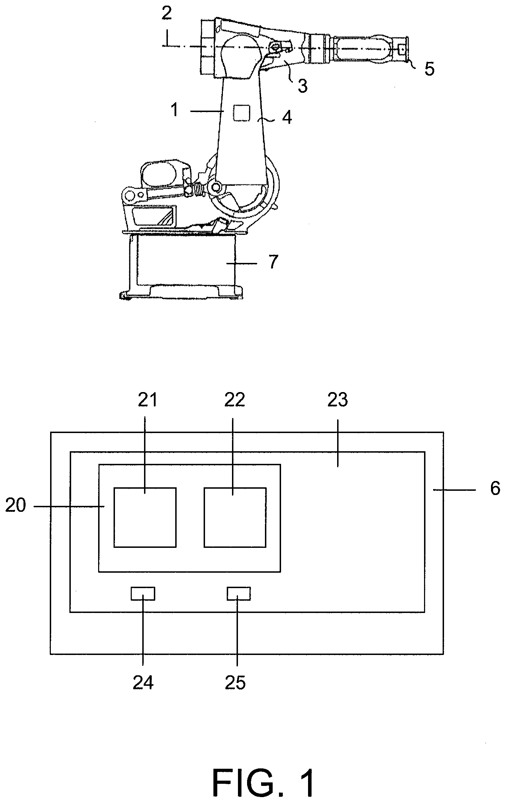

Die Fig. 1 zeigt einen Industrieroboter mit einer Kinematik für Bewegungen in beispielsweise sechs Freiheitsgraden als Beispiel einer Maschine. Der Industrieroboter weist in allgemein bekannter Weise einen Roboterarm 1 mit sechs Bewegungsachsen, Gelenken, Hebeln 3, 4 und einem Flansch 5 auf. In der Figur 1 ist nur eine der Bewegungsachsen mit dem Bezugszeichen 2 versehen und der Roboterarm 1 ist auf einem Sockel 7 befestigt.

Jede der Bewegungsachsen 2 wird von einem nicht näher dargestellten Antrieb bewegt. Die Antriebe umfassen beispielsweise jeweils einen elektrischen Motor und Getriebe, wie es dem Fachmann allgemein bekannt ist.

Der Industrieroboter weist ferner einen Steuerrechner 6 auf, der mit den Antrieben des Industrieroboters in nicht dargestellter Weise verbunden ist und diese mittels eines auf dem Steuerrechner 6 laufenden Rechenprogramms steuert, sodass der Flansch 5 des Industrieroboters eine vorgegebene Bewegung durchführt.

Der Steuerrechner 6 weist im Falle des vorliegenden Ausführungsbeispiels einen Mehrkernprozessor 20 auf. Der Mehrkernprozessor 20 ist auf einem Motherboard 23 befestigt und weist einen ersten Prozessorkern 21 und einen zweiten Prozessorkern 22 innerhalb seines Gehäuses auf. Die beiden Prozessorkerne 21, 22 sind eigenständige Recheneinheiten. Weitere Ressourcen des Steuerrechners 6, wie z.B. Speicher, und Ein- und Ausgänge sind nicht näher gezeigt.

Der Steuerrechner 6 ist ferner mit einem Betriebssystem konfiguriert. Ein Betriebssystem im Allgemeinen ist eine Software, die den Betrieb eines Computers, im Falle des vorliegenden Ausführungsbeispiels des Steuerrechners 6, ermöglicht. Es verwaltet die Ressourcen des Steuerrechners 6, wie z.B. den Mehrkernprozessor 20 und eventuell an den Steuerrechner 6 angeschlossene Ein- und Ausgabegeräte, sowie die Ausführung von auf dem Steuerrechner 6 laufenden Rechenprogrammen, wie z.B. das für die Steuerung des Industrieroboters vorgesehene Rechenprogramm.

Im Falle des vorliegenden Ausführungsbeispiels handelt es sich bei dem Betriebssystem um ein so genanntes "General-Purpose" Betriebssystem (Standard-Betriebssystem). Ein "General-Purpose" Betriebssystem ist ein Betriebssystem das nicht für eine spezielle Anwendung und insbesondere nicht speziell zum Steuern einer Maschine, wie den Industrieroboter, vorgesehen ist. Im Falle des vorliegenden Ausführungsbeispiels läuft auf dem Steuerrechner 6 das Betriebssystem Windows ® Vista ® der Microsoft ® Corporation. Die Begriffe "Windows", "Microsoft" und "Vista" sind markenrechtlich geschützte Begriffe der Microsoft Corporation. Unter dem Begriff "Steuern" soll auch "Regeln" verstanden werden.

Im Falle des vorliegenden Ausführungsbeispiels ist das Betriebssystem des Steuerrechners 6 derart konfiguriert, dass es Rechenaufgaben, die das zur Steuerung des Industrieroboters 1 vorgesehene Rechenprogramm in Echtzeit, insbesondere in harter Echtzeit, durchführen soll, ausschließlich dem ersten Prozessorkern 21 zum Abarbeiten zuführt, und die restlichen Aufgaben, wie insbesondere betriebssysteminterne Aufgaben oder zeitunkritische Aufgaben, aber auch eventuell weiche Echtzeitaufgaben, dem zweiten Prozessorkern 22 zum Abarbeiten zuführt.

Des Weiteren können folgende Arten von Aufgaben auf unterschiedlichen Arbeitsebenen unterschieden werden: Interrupts, so genannte Deferred Procedure Calls (DPCs) und Programmfäden. Ein Programmfaden, der im Englischen als "Thread" bezeichnet wird, ist ein einzelner Programmablauf.

Unter einem Interrupt versteht man in der Informatik ein externes Ereignis, z.B. eine abgelaufene Zeit eines Timers, einen Impuls synchron zu Drehungen von Bewegungsachsen 2 des Industrieroboters oder eines sonstigen Hardwaresignals, das eine Unterbrechung eines der Prozessorkerne 21, 22 und die Verzweigung in eine entsprechende Unterbrechungsroutine erzwingt. Aufgrund eines Interrupts bzw. einer dem Interrupt zugeordneten Unterbrechungsanforderung (Interrupt Request) wird die Unterbrechungsroutine, die auch als "Interrupt Service Routine (ISR)" bezeichnet wird, initiiert, die der Prozessorkern 21, 22 abarbeitet, den das Betriebssystem auswählt. Aufgrund der Unterbrechungsanforderung wird der normale Programmablauf des relevanten Prozessorkerns 21, 22 unterbrochen, um die Unterbrechungsroutine auszuführen. Ist die Unterbrechungsroutine abgearbeitet, dann kehrt der Programmablauf wieder an die Stelle vor der Unterbrechung zurück.

Im Falle des vorliegenden Ausführungsbeispiels wird die Zuordnung bestimmter Aufgaben zu den beiden Prozessorkernen 21, 22 u.A. wie folgt realisiert:
Die den normalen Programmablauf des Steuerrechners 6 unterbrechende Interrupts haben die höchste Priorität im System und werden von externen Ereignissen ausgelöst. Im Falle des vorliegenden Ausführungsbeispiels ist das Betriebssystem des Steuerrechners 6 derart initialisiert, dass bestimmte Interrupts zur Abarbeitung ihrer Unterbrechungsroutinen nur einem bestimmten der beiden Prozessorkerne 21, 22 zugeführt werden. Im Falle des vorliegenden Ausführungsbeispiels ist das Betriebssystem derart konfiguriert, dass es Interrupts, die zur Steuerung des Industrieroboters vorgesehen sind und deren Unterbrechungsroutinen insbesondere in Echtzeit abgearbeitet werden müssen, ausschließlich dem ersten Prozessorkern 21 zugeführt werden. Alle anderen Interrupts werden dem zweiten Prozessorkern 22 zum Abarbeiten ihrer Unterbrechungsroutinen zugeführt. Somit ist sicher gestellt, dass der erste Prozessorkern 21 im Wesentlichen nur Unterbrechungsroutinen höherpriorer Interrupts, insbesondere in Echtzeit abzuarbeitende Unterbrechungsroutinen zugewiesen bekommt und seine Rechenleistung nicht durch niederpriore Aufgaben verwendet wird.

Im Falle des hier verwendeten Betriebssystems Windows ® Vista ® ist die Zuordnung bestimmter Interrupts zu vorbestimmten Prozessorkernen 21, 22 durch geeignete Einträge in der so genannten Registry des Betriebssystems möglich.

Es ist möglich, dass systembedingt aus einer Unterbrechungsanforderung bestimmte, wenn nicht gar die meisten Betriebssystemaufrufen nicht durchgeführt werden können. Aus so genannten Deferred Procedure Calls (DPCs) ist dies jedoch möglich. Aus diesem Grunde ist im Falle des vorliegenden Ausführungsbeispiels das Betriebssystem des Steuerrechners 6 derart konfiguriert, dass eine Unterbrechungsroutine einen Deferred Procedure Call anstößt, welcher die Unterbrechungsroutine als solche uneingeschränkt durchführen kann, indem z.B. eine Kommunikation mit auf dem Steuerrechner 6 laufenden Programmfäden (Threads) ermöglicht wird.

Im Falle des vorliegenden Ausführungsbeispiels werden die DPCs in FIFO-Puffer zwischen gespeichert und in der Reihenfolge ihrer Zwischenspeicherung durch die Unterbrechungsroutine vom System auch wieder nacheinander abgerufen, um abgearbeitet zu werden. "FIFO" ist die Abkürzung für First-In-First-Out".

Im Falle des vorliegenden Ausführungsbeispiels ist das Betriebssystem des Steuerrechners 6 derart ausgeführt, dass es jedem Prozessorkern 21, 22 einen eigenen FIFO-Puffer zuordnet. In der Fig. 1 ist ein dem ersten Prozessorkern 21 zugeordneter erster FIFO-Puffer 24 und ein dem zweiten Prozessorkern 22 zugeordneter zweiter FIFO-Puffer 25 dargestellt. Somit werden im Falle des vorliegenden Ausführungsbeispiels Deferred Procedure Calls, die Interrupts zugeordnet sind, deren Unterbrechungsroutinen der erste Prozessorkern 21 abarbeiten soll, im ersten FIFO-Puffer 24 zwischengespeichert. Deferred Procedure Calls, die Interrupts zugeordnet sind, deren Unterbrechungsroutinen der zweite Prozessorkern 22 abarbeiten soll, werden dagegen im zweiten FIFO-Puffer 25 zwischengespeichert.

Im Falle des vorliegenden Ausführungsbeispiels werden auf dem Prozessor 20 auch Programmfäden (Threads) abgearbeitet. Damit sicher gestellt wird, dass Programmfäden (Threads), die dem zur Steuerung des Industrieroboters vorgesehenen Rechenprogramm zugeordnet sind und insbesondere in (harter) Echtzeit abgearbeitet werden müssen, auch in (harter) Echtzeit vom Prozessor 20 abgearbeitet werden können, ist das Betriebssystem des Steuerrechners 6 derart konfiguriert, dass es die zur Steuerung des Industrieroboters vorgesehenen Rechenprogramms zugeordneten Programmfäden (Threads) dem ersten Prozessorkern 21 zur Abarbeitung zuweist. Alle anderen Programmfäden weist das Betriebssystem des Steuerrechners 6 dem zweiten Prozessorkern 22 zur Abarbeitung zu.

Bei dem hier verwendeten Windows ® Betriebssystem kann dies durch das Konfigurieren einer so genannten "Thread Affinity Maske" erreicht werden.

Viele "General-Purpose" Betriebssysteme umfassen einen Multimediadienst, mittels derer Multimedia-Programme, wie insbesondere Audio- oder Video-Wiedergabeprogramme möglichst unterbrechungsfrei abgearbeitet werden können. Beim Microsoft ® Vista ® Betriebssystem wird dieser Mechanismus Multimedia Class Scheduler Service genannt, der automatisch bestimmten Programmfäden (Threads) mittels entsprechender Programmiermethoden mehr Rechenzeit des Mehrkernprozessors 20 zur Verfügung stellt. Der Multimedia Class Scheduler Service bedient sich dabei Informationen, die in der Registry gespeichert sind, um entsprechende Anwendungen (Tasks) zu erkennen und die entsprechende Priorität der Programmfäden (Threads) dieser Anwendungen zu bestimmen. Für die entsprechenden Programmiermethoden können z.B. so genannte API-Aufrufe (API ist die Abkürzung für "Application Program Interface", auf deutsch: Schnittstelle für Anwendungsprogramme) verwendet werden.

Alternativ oder zusätzlich kann es vorgesehen sein, die dem Rechenprogramm zur Steuerung des Industrieroboters zugeordneten Programmfäden (Threads), die insbesondere vom Mehrkernprozessor 20 in Echtzeit abgearbeitet werden müssen, über den Multimedia Class Scheduler Service des Betriebssystems eine höhere Priorität zu geben, so dass der Mehrkernprozessor 20 diese bevorzugt vor den restlichen Programmfäden (Threads) abarbeitet.

Der in der Fig. 1 gezeigte Mehrkernprozessor 20 weist genau zwei Prozessorkerne 21, 22 auf. Es ist auch möglich, einen Mehrkernprozessor mit mehr als zwei Prozessorkernen zu verwenden. In diesem Fall ist wenigstens einer der Prozessorkerne den (harten) Echtzeitaufgaben und wenigstens ein Mehrkernprozessor den übrigen Aufgaben zugeordnet.

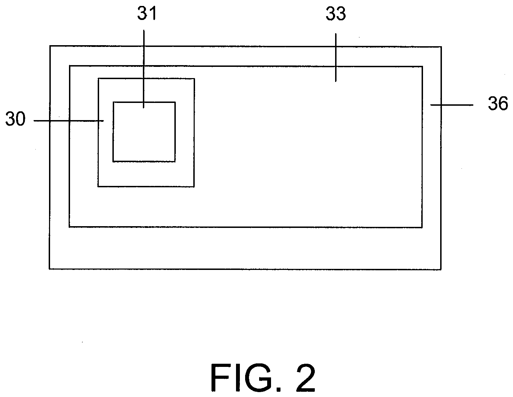

Die Fig. 2 zeigt einen weiteren Steuerrechner 36, der anstelle des in der Fig. 1 gezeigten Steuerrechners 6 zum Steuern des Industrieroboters verwendet werden kann. Im Gegensatz zum Steuerrechner 6 der Fig. 1 weist der Steuerrechner 36 im Falle des vorliegenden Ausführungsbeispiels einen Prozessor 30 mit einem einzigen Prozessorkern 31 auf. Der Steuerrechner 36 kann aber auch mit einem Mehrkernprozessor versehen sein. Der Prozessor 30 ist auf einem Motherboard 33 befestigt. Weitere Ressourcen des Steuerrechners 36, wie z.B. Speicher, und Ein- und Ausgänge sind nicht näher gezeigt.

Der Steuerrechner 36 ist mit einem Betriebssystem ausgestattet. Es verwaltet die Ressourcen des Steuerrechners 36, wie z.B. den Prozessor 30 und eventuell an den Steuerrechner 36 angeschlossene Ein- und Ausgabegeräte, sowie die Ausführung von auf dem Steuerrechner 36 laufenden Rechenprogrammen, wie z.B. ein für die Steuerung des Industrieroboters vorgesehene Rechenprogramm.

Im Falle des vorliegenden Ausführungsbeispiels handelt es sich bei dem Betriebssystem um ein so genanntes "General-Purpose" Betriebssystem. Im Falle des vorliegenden Ausführungsbeispiels läuft auf dem Steuerrechner 6 ebenfalls das Betriebssystem Windows ® Vista ® der Microsoft ® Corporation.

Im Falle des vorliegenden Ausführungsbeispiels ist es vorgesehen, die dem Rechenprogramm zur Steuerung des Industrieroboters zugeordneten Programmfäden (Threads), die insbesondere vom Prozessor 30 in harter Echtzeit abgearbeitet werden müssen, über den Multimedia Class Scheduler Service des Betriebssystems eine höhere Priorität zu geben, so dass der Prozessor 30 diese bevorzugt vor den restlichen Programmfäden (Threads) abarbeitet.

## Patentansprüche

1. Steuerungsvorrichtung zum Steuern eines Industrieroboters, die ein Computersystem aufweist, **dadurch gekennzeichnet,**
**dass** das Computersystem einen Mehrkernprozessor (20), der wenigstens einen ersten Prozessorkern (21) und wenigstens einen zweiten Prozessorkern (22) aufweist, und ein "General-Purpose" Betriebssystem, aufweist, und das Betriebssystem konfiguriert ist, Echtzeitaufgaben, die zum Steuern des Industrieroboters vorgesehen und harte Echtzeitaufgaben sind, ausschließlich dem ersten Prozessorkern (21) und weitere Aufgaben ausschließlich dem zweiten Prozessorkern (22) zuzuweisen, aufgrund von ersten externen Interrupts, die zur Steuerung des Industrieroboters vorgesehen sind, ausgelöste und den Echtzeitaufgaben zugeordnete erste Unterbrechungsroutinen dem ersten Prozessorkern (21) und aufgrund von zweiten externen Interrupts ausgelöste und den weiteren Aufgaben zugeordnete zweite Unterbrechungsroutinen dem zweiten Prozessorkern (22) zuzuweisen, und aus den ersten Unterbrechungsroutinen erste Deferred Procedure Calls zu initiieren, um daraus die den Echtzeitaufgaben zugeordneten ersten Unterbrechungsroutinen durchzuführen, und aus den zweiten Unterbrechungsroutinen zweite Deferred Procedure Calls zu initiieren, um daraus die den weiteren Aufgaben zugeordneten zweiten Unterbrechungsroutinen durchzuführen, und das Betriebssystem beschaffen ist, dem ersten Prozessorkern (21) einen ersten FIFO-Puffer (24) und dem zweiten Prozessorkern (22) einen zweiten FIFO-Puffer (25) zuzuordnen, um die ersten Deferred Procedure Calls in den ersten FIFO-Puffer (24) und die zweiten Deferred Procedure Calls in den zweiten FIFO-Puffer (25) zwischen zu speichern,
wodurch sicher gestellt wird, dass keine niederprioren und für den zweiten Prozessorkern vorgesehenen Unterbrechungsroutinen das Zuführen von für den ersten Prozessorkern bestimmten höherprioren Unterbrechungsroutinen blockieren.

2. Steuerungsvorrichtung nach Anspruch 1, bei der das Betriebssystem konfiguriert ist, den Echtzeitaufgaben zugeordneten erste Programmfäden dem ersten Prozessorkern (21) und den weiteren Aufgaben zugeordneten zweite Programmfäden dem zweiten Prozessorkern (22) zuzuweisen.

3. Steuerungsvorrichtung nach Anspruch 1 oder 2, bei der das Betriebssystem des Computersystems einen Multimediadienst aufweist und das Betriebssystem konfiguriert ist, den Echtzeitaufgaben zugeordnete Programmfäden über den Multimediadienst zu priorisieren.

4. Industrieroboter, aufweisend einen Roboterarm (1) und eine Steuerungsvorrichtung (6) nach einem der Ansprüche 1 bis 3 zum Steuern einer Bewegung des Roboterarms (1).

5. Verwendung eines Multimediadienstes eines Betriebssystems einer Steuerungsvorrichtung (6) nach einem der Ansprüche 1 bis 3 zur Priorisierung von Echtzeitaufgaben die vorgesehen sind, die Bewegung des Industrieroboters zu steuern.

## Claims

1. A control apparatus for controlling an industrial robot, which comprises a computer system, **characterised in**
**that** the computer system comprises a multi-core processor (20) having at least one first processor core (21) and at least one second processor core (22), and a "general-purpose" operating system, wherein the operating system is configured to assign real-time tasks, which are intended for controlling the industrial robot and which are hard real-time tasks, exclusively to the first processor core (21) and assign other tasks exclusively to the second processor core (22), to assign first interrupt routines, which are triggered due to first external interrupts, which are intended to control the industrial robot, and assigned to the real-time tasks, to the first processor core (21), and to assign second interrupt routines, which are triggered due to second external interrupts and assigned to the other tasks, to the second processor core (22) and to initiate first deferred procedure calls based on the first interrupt routines to execute the first interrupt routines, which are assigned to the real-time tasks, and to initiate second deferred procedure calls based on the second interrupt routines to execute the second interrupt routines, which are assigned to the other tasks, and wherein the operating system is further configured to assign a first FIFO buffer (24) to the first processor core (21) and assign a second FIFO buffer (25) to the second processor core (22) in order to temporarily store the first deferred procedure calls in the first FIFO buffer (24) and in order to temporarily store the second deferred procedure calls in the second FIFO buffer (25), which ensures that no interrupt routines which have a lower priority and which are assigned to the second processor core block the feed of interrupt routines which have a higher priority and are assigned to the first processor core.

2. The control apparatus according to claim 1, wherein the operating system is configured to assign first program threads assigned to the real-time tasks to the first processor core (21) and to assign second program threads assigned to the other tasks to the second processor core (22).

3. The control apparatus according to claim 1 or 2, wherein the operating system of the computer system includes a multimedia service and wherein the operating system is configured to prioritise program threads assigned to the real-time tasks by means of the multimedia service.

4. An industrial robot, comprising a robot arm (1) and a control apparatus (6) according to any one of claims 1 to 3, for controlling a movement of the robot arm (1).

5. Use of a multimedia service of an operating system of a control apparatus (6) according to any one of claims 1 to 3, for prioritising real-time tasks which are intended to control the movement of the industrial robot.

## Revendications

1. Dispositif de commande pour la commande d'un robot industriel qui présente un système informatique, **caractérisé en ce que** le système informatique présente un processeur à plusieurs coeurs (20) qui présente au moins un premier coeur de processeur (21) et au moins un second coeur de processeur (22), et un système d'exploitation « d'usage général », et le système d'exploitation est configuré afin d'attribuer des tâches en temps réel qui sont prévues pour la commande du robot industriel et qui sont des tâches en temps réel difficiles, uniquement au premier coeur de processeur (21) et d'autres tâches uniquement au second coeur de processeur (22),
afin d'attribuer, en raison de premières interruptions externes qui sont prévues pour la commande du robot industriel, des premières routines d'interruption déclenchées et associées aux tâches en temps réel au premier coeur de processeur (21) et afin d'attribuer, en raison de secondes interruptions externes, des secondes routines d'interruption déclenchées et associées aux autres tâches au second coeur de processus (22), et afin d'initier à partir des premières routines d'interruption des premiers appels de procédure différée afin de réaliser à partir de ceux-ci les premières routines d'interruption associées aux tâches en temps réel, et afin d'initier à partir des secondes routines d'interruption des seconds appels de procédure différée afin de réaliser à partir de ceux-ci les secondes routines d'interruption associées aux autres tâches, et le système d'exploitation est agencé afin d'associer au premier coeur de processeur (21) une première mémoire tampon FIFO (24) et au second coeur de processeur (22) une seconde mémoire tampon FIFO (25) afin de mettre en mémoire tampon les premiers appels de procédure différée dans la première mémoire tampon FIFO (24) et les seconds appels de procédure différée dans la seconde mémoire tampon FIFO (25), par quoi il est assuré qu'aucune routine d'interruption moins prioritaire et pour le second coeur de processeur ne bloque l'amenée de routines d'interruption plus prioritaires déterminées pour le premier coeur de processeur.

2. Dispositif de commande selon la revendication 1, pour lequel le système d'exploitation est configuré afin d'attribuer des premiers fils de programme associés aux tâches en temps réel au premier coeur de processeur (21) et des seconds fils de programme associés aux autres tâches au second coeur de processeur (22).

3. Dispositif de commande selon la revendication 1 ou 2, pour lequel le système d'exploitation du système informatique présente un service multimédia et le système d'exploitation est configuré afin de prioriser des fils de programme associés aux tâches en temps réel sur le service multimédia.

4. Robot industriel présentant un bras de robot (1) et un dispositif de commande (6) selon l'une des revendications 1 à 3 pour la commande d'un mouvement du bras de robot (1).

5. Utilisation d'un service multimédia d'un système d'exploitation d'un dispositif de commande (6) selon l'une des revendications 1 à 3 pour la priorisation de tâches en temps réel, qui sont prévues afin de commander le mouvement du robot industriel.
